# EUROPEAN PATENT APPLICATION

(11) **EP 2 957 181 A1**
(43) Date of publication of application: **23.12.2015**
(21) Application number: 14460034.3
(22) Date of filing: 20.06.2014
(51) Int. Cl.: A23C 15/12, A23C 15/16, A23D 7/015

(54) **Method for reducing fat content in butter and semi-skimmed butter**

(71) Applicant: AJAX - Sp. z o.o., 43-600 Jaworzno (PL)
(72) Inventor: Placek, Ryszard, 32-065 Krzeszowice (PL)
(74) Representative: Drelichowski, Henryk

(57) **Abstract**

The present invention relates to a method for reducing the fat content of butter by combining butter with an aqueous phase, the invention also relates to the semi-skimmed butter produced using this method, which has a fat content between 38 and 42%.

## Description

The present invention relates to the method for reducing fat content in butter and semi-skimmed butter produced using this method.

There are many known butter production methods for reducing fat content in butter and there are known recipes for semi-skimmed butter.

The Polish specification of invention number PL 114942 entitled "Method for producing a low-fat butter-like product and a device for producing a low-fat butter-like product" presents the method for producing a low-fat butter-like product. In this method so much energy is supplied mechanically to the processed oil-in-water emulsion per volume unit as to achieve a preliminary degree of phase transition and create a related separate intermediate structure, after which the supply of energy is stopped and the created stable product is brought for further use without any additional treatment. The device for production of a butter-like product is made of a cylinder with a head. A reference electrode and a measuring electrode are attached to the cylinder in such a manner that fixed resistors of these electrodes form the Wheatstone bridge. The disadvantage of this invention is the lack of the possibility to produce a product with a set fat content.

The Polish specification of invention number PL 127082 entitled "System for water content control in butter" presents a system which guarantees automatic water content control in butter within a wide range and eliminates the need for manual operation of the butter producing machine, while guaranteeing an appropriate product quality. However, this known system for water content control in butter does not guarantee the possibility to reduce fat content in butter.

Invention No. US 2005/0042351 being the subject of the application filed in the United States of America, entitled "Low-calorie low-fat butter-flavoured topping compositions and methods of preparation" presents a method for preparation of low-calorie and low-fat butter-flavoured compositions. This composition has a fluid consistency and contains more than 50% by weight of water and less than 16% by weight of fat. After production this composition is packed into a container with aerosol which may be used only if stored at room temperature for at least 10 minutes. The disadvantage of this invention is its limited application for liquid butter only.

Invention No. PCT/SE93/00716 being the subject of an international application and published under number WO94/05160 presents a method of producing a fat product with a reduced fat content by mixing cream with a fat content of 40-80% with a desired amount of water phase containing stabilizing substances and salt. During the mixing operation the temperature is kept between 50-80°C. The obtained mixture in form of an oil-in-water emulsion is cooled and worked in such a way that phase reversal takes place. A partial stream of phase reversed product, now a water-in-oil emulsion, is returned to the inlet of a first cooling step and is mixed with the starting mixture. The obtained end product consists of a stable water-in-oil emulsion. The product only contains milk fat and has a fat content of 25-60%, it contains only emulsifiers naturally occurring in'the cream and has a casein content below 2%.

Invention number P.356867 being the subject of the application filed in Poland presents a method for producing low-fat butter for children. This method includes adding powder milk in the amount ranging from 0.1 to 3 parts by weight to liquid extra butter from 80 to 85 parts by weight, the powder having been dissolved earlier in cream with a fat content of 15-40% in the amount ranging from 12 to 16 parts by weight and then after thorough mixing and intensive cooling, having it undergo plastic processing.

Invention No. US 2013/0251852 being the subject of the application filed in the United States of America, entitled "Reduced-fat natural butter product and methods of manufacturing the same" presents the method for manufacturing reduced-fat butter. This method includes churning cream to create concentrated milk fat and buttermilk. The buttermilk is churned three times to concentrate the amount of solids in the buttermilk. Then the concentrated buttermilk is blended with the concentrated milk fat to form a final reduced-fat butter product comprising no more than 60% fat.

The disadvantage of known methods for producing reduced-fat butter is the execution of these known processes at the stage of transition of oil-in-water emulsion, preferably a starting material which is cream with a separate intermediate or irregular structure and a transition from this intermediate structure in the water phase to a granular water-in-oil structure. The water-in-oil structure forms a mixture of butter grains and buttermilk and depending on one of these transitions, a specific amount of mechanical energy is supplied to the processed material. According to these known methods, the reduction of fat content in butter is a complex and expensive process leading to a small reduction in fat content in the final product. Moreover, the known methods for producing butter are applied only to one specific technological process. It is impossible to apply the known methods to every type of already produced butter with a specific fat content.

Butter fats and butter, forming the so called milk fats, are valuable materials without which it is impossible to imagine food needs. Butter is usually obtained in the form of a plastic mixture of milk, cream or whey fat, also with the use of water and edible salt.

There are many known types of butter, such as for example butter made of sour cream, cream butter or mildly soured butter, depending on starting materials and processing conditions.

Butter fat is usually obtained from butter, from which water and milk components are drawn off. As a result this food item has longer storage life and therefore is perfect for industrial use in production of food items such as for example ice cream or biscuit products. However, butter fat can be also consumed directly.

There is no doubt as to the high physiological nutritious value as well as likeable, tasty effects of milk fats, including butter or butter fat. It is also known that modern eating habits connected with professional life of people, which usually does not require much movement, may lead to health problems. At the same time attention is focused also on fat content in food items.

Unexpectedly it turned out that butter produced earlier with any given method with fat content ranging from 70% to 99.9% by weight, which was heated to the temperature between 65°C and 85°C and then combined with an appropriate amount of water having the temperature between 35°C and 70°C in the presence of inert gas, led to development of a highly tasty and stable product with approx. 40% by weight of fat in butter.

The essence of the method for producing reduced-fat butter is the combination of butter produced earlier with any method, the said butter forming the fat phase of the process, with water containing emulsifying and preserving substances, with added salt and if need be flavours, forming the water phase of the process. Components combined this way undergo homogenization by mixing them intensively in the presence of inert gas.

The -fat phase develops by heating the butter to the temperature between 65°C and 85°C, the butter having been produced with any given method with fat content from 70% to 99.9% by weight and then having the melted butter mixed. The following is added in turn to the process of mixing the fat phase: emulsifier mono- and diglycerides of fatty acids with a trade name E471 in the amount ranging from 0 to 7% by weight; polyglycerol polyricinoleate in the amount ranging from 0 to 5% by weight and lecithin, preferably sunflower lecithin, in the amount ranging from 0 to 3% by weight.

The water phase develops by heating water to the temperature between 35°C and 70°C and having the heated water mixed. The following is added to the process of mixing the water phase: milk acid in the amount ranging from 0.02% to 0.04% by weight; salt in the amount ranging from 0.2% to 0.5% by weight; potassium sorbate in the amount of up to 0.05% by weight; butter flavour in the amount of up to 0.02% by weight and annatto colouring in the amount of up to 0.02% by weight.

The fat and water phases developed this way are combined with each other by adding water phase to the fat phase while continuously mixing both of these phases. Then inert gas is added, preferably nitrogen, in the amount sufficient to create a layer of inert gas above the components being mixed. The added inert gas leads to the development of a layer separating fat from oxygen inside the vessel which prevents oxidation of milk fat inside the vessel where the process of emulsifying of the mixed components takes place. The process of mixing is performed until the complete homogenization of these phases is obtained. The final stage of the method for producing reduced-fat butter is the process of its cooling to obtain smooth, homogeneous consistency, after which the finished product is packaged. The combination of the fat phase with the water phase results in the development of reduced-fat butter by bonding approx. 40% by weight of fat included in the fat phase with approx. 60% by weight of water included in the water phase.

The low-fat butter produced with the method according to this invention is the butter with a structure of a finished product including:
- water in the amount ranging from 55% to 60% by weight,
- milk fat in the amount ranging from 38% to 42% by weight,
- emulsifier mono- and diglycerides of fatty acids in the amount ranging from 0% to 7% by weight,
- polyglycerol polyricinoleate in the amount ranging from 0 to 5% by weight,
- lecithin in the amount ranging from 0% to 3% by weight,
- milk acid in the amount ranging from 0.02% to 0.04% by weight,
- salt in the amount ranging from 0.2% to 0.5% by weight,
- butter flavour in the amount of up to 0.02% by weight,
- potassium sorbate in the amount of up to 0.05% by weight,
- annatto colouring in the amount of up to 0.02%.

This butter can be packaged into packets and it is easily spread on bread.

The processes of mixing and heating the fat phase and of heating and mixing the water phase are performed separately, each in a separate vessel. The size of these vessels is selected while taking into account the amount of the produced low-fat butter. Each of these vessels is equipped with a controlled system for medium heating located inside the vessel and is equipped with a mechanical mixer with an adjustable number of rotations. The vessel for development of the fat phase is equipped additionally with a tight closure and a valve to discharge the excess of gases.

The following is fed to the fat phase vessel: natural butter produced earlier with any method with fat content ranging from 70% to 99.9% by weight and additives in the form of emulsifier mono- and diglycerides of fatty acids with a trade name E471 in the amount of 0 to 7% by weight, polyglycerol polyricinoleate in the amount ranging from 0 to 5% by weight and lecithin in the amount ranging from 0 to 3% by weight. Next, the butter with additives is heated up in the vessel to the temperature between 65°C and 85°C, then the mixer is activated while the process of heating up is being continued. The content of the vessel is mixed intensively which results in the emulsification of the mixed mass.

The following is fed to the water phase vessel: water and emulsifying, preserving and taste substances, including salt and flavours in the amount of approx. 5% by weight.

The fat phase and the water phase are combined after thorough mixing of each of these phases. In this process to the vessel with the activated mixer of fat phase, filled with homogenized fat phase having the temperature between 65°C and 85°C the water phase is added having the temperature between 35°C and 70°C. Then inert gas is added to the vessel, preferably nitrogen, in the amount sufficient to create a layer of inert gas above the components being mixed. After the fat phase combines with the water phase, these phases are mixed intensively in the vessel until a homogeneous consistency of the product with a fat content of approx. 40% by weight is obtained. After obtaining a homogeneous mass homogenized with water, the vessel is emptied and the mass undergoes the cooling process, preferably on scraped-surface or other heat exchangers.

The cooled-down butter with smooth, homogeneous consistency and with a low fat content as a final product is packaged, preferably in plastic, cube shaped packagings.

Preferably, for the needs of this invention, the process of mixing the fat phase with the water phase is performed in an additional vessel for the final product. This vessel is equipped with a mechanical mixer as well as a tight closure and a valve to discharge the excess of gasses. In such a case, in the first place the fat phase is poured to the final product vessel with an operating mechanical mixer, next the water phase is poured, and then the vessel is closed tightly. Then inert gas is added to the vessel, preferably nitrogen, in the amount sufficient to create a layer of inert gas above the components being mixed. The process of intensive mixing results in a complete homogenization of these phases and the development of the final product in the form of low-fat butter. After obtaining a homogeneous mass homogenized with water, the vessel is emptied and the mass undergoes the cooling process, preferably on scraped-surface or other heat exchangers and the cooled down final product is packaged.

As a result of the combination of the fat phase with the water phase, a large amount of water is bound in butter, i.e. approx. 60% by weight of water in 40% by weight of fat thus giving the structure of a finished product which:
- can be packaged in packets;
- can be easily spread on bread;
- preserves its solid structure when taken out from freezing devices (it does not stratify, it does not crumble, it is not washed with water), preserves all desired features, it is homogeneous, easily spread and smooth;
- preserves appropriate taste of cow butter without any palpable tallowiness or aftertaste of margarine which is given by emulsifiers of plant origin.

An important element of the method according to the invention is the maintenance of proportions to obtain a product with desired taste and organoleptic properties as well as proper consistency.

The final product produced with this method according to the invention, i.e. reduced fat butter contains:
- water in the amount ranging from 55% to 60% by weight,
- milk fat in the amount ranging from 38% to 42% by weight,
- emulsifier mono- and diglycerides of fatty acids in the amount ranging from 0% to 7% by weight, preferably 4% by weight;
- polyglycerol polyricinoleate in the amount ranging from 0 to 5% by weight,
- lecithin in the amount ranging from 0% to 3% by weight,
- milk acid in the amount ranging from 0.02% to 0.04% by weight,
- salt in the amount ranging from 0.2% to 0.5% by weight,
- butter flavour in the amount of up to 0.02% by weight,
- potassium sorbate in the amount of up to 0.05% by weight,
- annatto colouring in the amount of up to 0.02%.

The advantage of the method of fat content reduction in butter is the production of natural butter including no more than 40% by weight of fat and at the same time the reduction of a significant amount of bad cholesterol of animal origin and too high calorific value of previously used butter of Extra type or butter with fat content reduced to 3/4 by volume.

By reducing the fat content in the product manufactured with the method according to the invention, these adverse substances, i.e. bad cholesterol and the calorific value of the product were reduced successfully.

The obtained product enables the consumer to enjoy a full bouquet of butter taste while it does not carry with it the adverse effects such as accumulation of bad cholesterol which causes atherosclerosis and other cardiovascular diseases and reduces the risk of accumulation of fat in the human body, thus this product prevents obesity.

By adding emulsifiers the following plant sterols are introduced to the product: beta-sitosterol, sigmasterol, campasterol, brassicasterol, which carry good cholesterol. This cholesterol allows cleaning of the blood circulation system from bad cholesterol present in the human vascular system. On the other hand the addition of lecithin has a positive impact on human health, in particular it has a positive impact on brain operation. Research shows that it also supports the blood circulation system.

The method according to the invention is used to obtain a product in the form of semi-skimmed butter which does not stratify while being pressed and can be packed in traditional plastic, cube-shaped packagings, it is easily spread and at the same time it has high sensory parameters such as for example mild and delicate taste, flavour or easy spread.

At present there is no butter on the market, characterised by such parameters. The product is to be perceived as healthy and supporting a healthy, low-fat diet.

The method for manufacturing reduced-fat butter is disclosed in the examples of production.

### Example 1:

500 kg of EXTRA butter supplied directly from a nearby dairy was fed to the vessel with a mixer, with a capacity of 1.2 m³. The fat content in this butter was 82% by weight.
Then this vessel together with butter was heated up to the temperature of 85°C, and then the mixer was activated. The following was added in turns to the butter mixed in the vessel:
1. emulsifier mono- and diglycerides of fatty acids E-471 in the amount of 10 kg which accounted for 1% by weight;
2. polyricinoleate in the amount of 12 kg which accounted for 1.2% by weight;
3. sunflower lecithin in the amount of 10 kg which accounted for 1% by weight;
   500 kg of water was poured into a separate vessel with a mixer, with the capacity of 1.2 m³, and then the mixer was activated and the additives were added:
4. salt in the amount of 2 kg;
5. milk acid in the amount of 0.3 kg;
6. potassium sorbate in the amount of 0.5 kg;
7. butter flavour in the amount of 0.2 kg;
8. annatto colouring in the amount of 0.2 kg;
   forming the water phase, which was heated up to the temperature of 70°C while being mixed constantly.

When the components dissolved thoroughly, the water phase was added to the fat phase vessel and approx. 1 m³ of nitrogen at the pressure of 2 Pa was added while mixing it all very intensively.

When all the components were mixed, the obtained final product was placed in a scraped-surface cooler and cooled down to the temperature of 17°C.

The low-fat butter produced in the process contained:
Water in the amount of 55.5% by weight;
Milk fat in the amount of 41% by weight;
Emulsifier E-471 in the amount of 1% by weight;
Polyricinoleate in the amount of 1.2% by weight;
Salt in the amount of 0.2% by weight;
Lecithin in the amount of 1% by weight;
Milk acid in the amount of 0.03% by weight;
Potassium sorbate in the amount of 0.05% by weight;
Butter flavour in the amount of 0.02% by weight;
Annatto colouring in the amount of 0.02% by weight.

The butter obtained with the method according to the invention had smooth, homogeneous consistency enabling its packaging in plastic, cube-shaped packagings for retail purposes.

### Example 2:

400 kg of dehydrated milk fat supplied directly from a nearby dairy was fed to the vessel with a mixer, with a capacity of 1.2 m³. The fat content in this butter was 99.6% by weight.

Then this vessel together with butter was heated up to the temperature of 85°C, and then the mixer was activated. The following was added in turns to the butter mixed in the vessel:
1. emulsifier mono- and diglycerides of fatty acids E-471 in the amount of 10 kg which accounted for 1% by weight;
2. polyricinoleate in the amount of 12 kg which accounted for 1.2% by weight;
3. sunflower lecithin in the amount of 5 kg which accounted for 0.5% by weight.
   600 kg of water was poured into a separate vessel with a mixer, with the capacity of 1.2 m³, and then the mixer was activated and the additives were added:
4. salt in the amount of 4 kg;
5. milk acid in the amount of 0.3 kg;
6. potassium sorbate in the amount of 0.5 kg;
7. butter flavour in the amount of 0.2 kg;
8. annatto colouring in the amount of 0.2 kg;
   forming the water phase, which was heated up to the temperature of 70°C while being mixed constantly.

When the components dissolved thoroughly, the water phase was added to the fat phase vessel and approx. 1 m³ of nitrogen at the pressure of 2 Pa was added while mixing it all very intensively.

When all the components were mixed, the obtained final product was placed in a scraped-surface cooler and cooled down to the temperature of 17°C.
The low-fat butter produced in the process contained:
Water in the amount of 56.89% by weight;
Milk fat in the amount of 39% by weight;
Emulsifier E-471 in the amount of 1% by weight;
Polyricinoleate in the amount of 1.2% by weight;
Salt in the amount of 0.4% by weight;
Lecithin in the amount of 0.5% by weight;
Milk acid in the amount of 0.03% by weight;
Potassium sorbate in the amount of 0.05% by weight;
Butter flavour in the amount of 0.02% by weight;
Annatto colouring in the amount of 0.02% by weight.

The produced butter had smooth, homogeneous consistency enabling its packaging in plastic, cube-shaped packagings for retail purposes.

## Claims

1. The method for reducing fat content in butter, **characterized in that** it involves the combination of butter produced earlier with any method, the said butter forming the fat phase of the process, with water to which emulsifying and preserving substances are added, with added salt and if need be flavours, whereby this water forms the water phase of the process; then the combined components undergo homogenization by intensive mixing in the presence of inert gas, whereby the fat phase develops by heating the natural butter with fat content from 70% to 99.9% by weight to the temperature between 65°C and 85°C and having the melted butter mixed to which the following is added: emulsifier mono- and diglycerides of fatty acids with a trade name E471 in the amount ranging from 0 to 7% by weight; polyglycerol polyricinoleate in the amount ranging from 0 to 5% by weight; lecithin in the amount ranging from 0 to 3% by weight, while the water phase develops by heating water to the temperature between 35°C and 70°C and having the heated water mixed and then the following is added to the process of mixing the water phase: milk acid in the amount ranging from 0.02% to 0.04% by weight; salt in the amount ranging from 0.2% to 0.5% by weight; potassium sorbate in the amount of up to 0.05% by weight; butter flavour in the amount up to 0.02% by weight and annatto colouring in the amount up to 0.02% by weight; then the homogenized water phase and inert gas are added to the homogenised fat phase in the amount sufficient to create a layer of inert gas above the components being mixed, and after completion of the homogenization process of the phases the process of cooling down takes place until a smooth, homogeneous consistency is obtained, and the finished product with fat content between 38% and 42% by weight is packaged.

2. The method according to claim 1 **characterized in that** the processes of mixing and heating up the fat phase as well as heating up and mixing the water phase are performed separately in separate vessels: in the fat phase vessel and the water phase vessel, each of which is equipped with a controlled system for medium heating located inside the vessel and is equipped with a mechanical mixer with adjustable number of rotations, where the vessel intended for fat phase development is equipped additionally with a tight closure and a valve to discharge the excess of gases, where the following is fed to the fat phase vessel: natural butter with fat content ranging from 70% to 99.9% by weight and additives in the form of emulsifier mono- and diglycerides of fatty acids with a trade name E471 in the amount ranging from 0 to 7% by weight, polyglycerol polyricinoleate in the amount ranging from 0 to 5% by weight and lecithin in the amount ranging from 0 to 3% by weight, and then the butter with additives is heated up in the fat phase vessel to the temperature between 65°C and 85°C, whereby the content of the vessel is mixed intensively, while the following is fed to the water phase vessel: water and emulsifying, preserving and taste substances, including salt and flavours in the amount of approx. 5% by weight and the water phase while being mixed constantly is heated up to the temperature between 35°C and 70°C, and then the homogenized water phase is added to the fat phase vessel filled with the homogenized fat phase and the fat phase vessel is closed tightly and inert gas is added through a vent; then the fat phase and the water phase undergo intensive mixing until a homogeneous consistency is obtained of the product with fat content between 38% and 42% by weight, then the vessel is emptied and the produced low-fat butter undergoes the cooling process, preferably on scraped-surface or other heat exchangers and then it is packaged.

3. The method according to claims 1 and 2 **characterized in that** the process of mixing the fat phase with the water phase is performed in the final product vessel, which is equipped with a mechanical mixer as well as a tight closure and a valve to discharge the excess of gasses, where to the final product vessel with the mechanical mixer in operation the homogenized fat phase is poured and then the homogenized water phase is poured and the vessel is closed tightly and inert gas is added to the final product vessel through a vent, and then the process of intensive mixing takes place when after homogenization of these phases, a final product is obtained in the form of low-fat butter.

4. The method according to claims 1, 2 and 3 **characterized in that** the added inert gas is nitrogen, and the lecithin is the sunflower lecithin.

5. The low-fat butter containing
milk fat, water, salt, butter flavours and colourings, **characterized in that** it contains:
- water in the amount ranging from 55% to 60% by weight,
- milk fat in the amount ranging from 38% to 42% by weight,
- emulsifier mono- and diglycerides of fatty acids in the amount ranging from 0% to 7% by weight,
- polyglycerol polyricinoleate in the amount ranging from 0% to 5% by weight,
- lecithin in the amount ranging from 0% to 3% by weight,
- milk acid in the amount ranging from 0.02% to 0.04% by weight,
- salt in the amount ranging from 0.2% to 0.5% by weight,
- butter flavour in the amount of up to 0.02% by weight,
- potassium sorbate in the amount of up to 0.05% by weight,
- annatto colouring in the amount of up to 0.02%.

## Amended claims

### Amended claims in accordance with Rule 137(2) EPC.

1. The method for reducing fat content in butter, consisting the combination of extra type butter produced earlier with water and the following is added to this mixture:
emulsifying substances, preserving substances with added salt, lecithin and if need be flavours, whereby the mixed components undergo homogenization by intensive mixing in the presence of inert gas, **characterized in that** the end product is the butter with fat content ranging from 70.0% to 99.9% by weight, including clarified butter, on the basis of which the fat phase is developed by heating up the clarified butter with fat content from 99.6% to 99.9% to the temperature between 65°C and 85°C and having the melted butter mixed with added emulsifiers and the water phase is developed separately by heating up water to the temperature between 35°C and 70°C, which is mixed and
emulsifying, preserving and flavour substances are added to the process of mixing the water phase, and then the fat combines with the water phase by adding the homogenized water phase to the homogenized fat phase and
the mixing process of the combined phases is performed to obtain the total homogenization of the fat phase with the water phase, and once the process of homogenization is completed, the cooling process takes place to obtain smooth, homogeneous consistency, and the finished product with fat content ranging from 38% to 42% by weight is packaged.

2. The method according to claim 1 **characterized in that** the processes of mixing and heating up the fat phase as well as heating up and mixing the water phase are performed separately in separate vessels: in the fat phase vessel and the water phase vessel, and each of which is equipped with a controlled system for medium heating located inside the vessel and is equipped with a mechanical mixer with adjustable number of rotations, where the vessel intended for fat phase development is equipped additionally with a tight closure and a valve to discharge the excess of gases, where the following is fed to the fat phase vessel: clarified natural butter with fat content ranging from 99.6% to 99.9% by weight and additives in the form of emulsifiers, and then the butter with additives is heated up in the fat phase vessel to the temperature between 65°C and 85°C, whereby the content of the vessel is mixed intensively, while the following is fed to the water phase vessel: water and emulsifying, preserving and taste substances, and the water phase while being mixed constantly is heated up to the temperature between 35°C and 70°C, and then the homogenized water phase is added to the fat phase vessel filled with the homogenized fat phase and the fat phase vessel is closed tightly and inert gas is added through a vent; then the fat phase and the water phase undergo intensive mixing until a homogeneous consistency is obtained of the product with fat content between 38% and 42% by weight, then the vessel is emptied and the produced low-fat butter undergoes the cooling process, preferably on scraped-surface or other heat exchangers and then it is packaged.
